# EUROPÄISCHE PATENTANMELDUNG

(11) **EP 4 043 373 A1**
(43) Veröffentlichungstag der Anmeldung: **17.08.2022**
(21) Anmeldenummer: 22151880.6
(22) Anmeldetag: 17.01.2022
(51) Int. Cl.: B65G 54/02, B65G 47/86

(54) **VORRICHTUNG ZUM BEHANDELN VON BEHÄLTNISSEN MIT LINEARANTRIEB, SOWIE LINEARANTRIEB**

(30) Priorität: 15.02.2021 DE 102021103479
(71) Anmelder: KRONES AG, 93073 Neutraubling (DE)
(72) Erfinder: Höllriegl, Thomas, 93073 Neutraubling (DE); Habenschaden, Nina, 93073 Neutraubling (DE); Effenberger, Harald, 93073 Neutraubling (DE)
(74) Vertreter: Bittner, Bernhard

(57) **Zusammenfassung**

Vorrichtung (1) zum Behandeln von Behältnissen (10) mit einer Behandlungseinrichtung (4) zum Behandeln der Behältnisse (10), und einem Träger (2), der bezüglich einer Halterung (42) linear beweglich angeordnet ist wobei zwischen dem Träger (2) und der Halterung (42) eine Vielzahl von Wälzkörpern (62) angeordnet ist, welche die Bewegung der Behandlungseinrichtung (4) führen, wobei diese Wälzkörper (62) wenigstens zeitweise sowohl eine Lauffläche des Trägers (2) als auch eine Lauffläche der Halterung (42) kontaktieren,
dadurch gekennzeichnet, dass
die Wälzkörper (62) in einem Wälzkörperkäfig (6) angeordnet sind und sich in der Bewegungsrichtung (X) bewegen, wobei sich dieser Wälzkörperkäfig (6) in der Bewegungsrichtung (X) erstreckt und eine größere Länge aufweist als die Halterung (42).

## Beschreibung

Die vorliegende Erfindung bezieht sich auf eine Vorrichtung zum Behandeln von Behältnissen. Aus dem Stand der Technik ist eine Vielzahl von derartigen Vorrichtungen seit langem bekannt. Dabei kann es sich beispielsweise um Fülleinrichtungen, um Blasformeinrichtungen oder auch um Transporteinrichtungen für Behältnisse handeln. Die vorliegende Erfindung wird unter Bezugnahme auf Transporteinrichtungen, wie beispielsweise Transportsterne zum Transportieren von Behältnissen beschrieben. Es wird jedoch darauf hingewiesen, dass die vorliegende Erfindung auch bei anderen Vorrichtungen zum Behandeln von Behältnissen Anwendung finden kann.

Bei derartigen Vorrichtungen zum Behandeln von Behältnissen ist es teilweise nötig, lineare Bewegungen mit einer hohen Geschwindigkeit und/oder einer hohen Beschleunigung durchzuführen. Dies gilt beispielsweise für sogenannte Teilungsverzugssterne, welche dazu dienen, einen Abstand nacheinander transportierter Behältnisse zu verändern. Um diese Bewegungen zu erreichen, werden im Stand der Technik teilweise Linearführungen verwendet, welche beispielsweise ein Greifelement entlang einer geraden Richtung bewegen können.

Im Stand der Technik gibt es eine Vielzahl von Bauarten von Linearführungen, und auch sogenannte Profilschienen von unterschiedlichen Herstellern. Diese zeichnen sich durch eine hohe Belastbarkeit, eine hohe Präzision und eine hohe Steifigkeit auf. Viele dieser Linearführungen stoßen jedoch bei sehr hohen Geschwindigkeiten und Beschleunigungen an ihre Grenzen. So sind aus dem Stand der Technik Führungswägen bekannt, welche beispielsweise einen Kugelmechanismus oder Zylinderrollen aufweisen sowie einen Rücklaufkanal und Umlenkköpfe.

Aus dem Stand der Technik sind derzeit noch keine Führungen bekannt, die hier auch bei extrem großen Transport- oder Bewegungsgeschwindigkeiten zufriedenstellend arbeiten. So gibt es im Stand der Technik keine Standardlinearführungen, welche die erforderlichen extrem hohen Bahngeschwindigkeiten dauerhaft erreichen, bzw. diesen standhalten.

Die meisten Linearführungen weisen interne Umlenkkanäle für die Wälzkörper, wie beispielsweise Kugeln oder Zylinderrollen auf, die zu viel Reibung bzw. Widerstand aufweisen. Durch die hohe Reibung und den entstehenden Druck der Kugelkette sind meist die Umlenkungen bei Dauerbeanspruchung bzw. Höchstleistung nicht beständig.

Der folgenden Erfindung liegt daher die Aufgabe zugrunde, eine Linearführung zur Verfügung zu stellen, welche auch hohe oder höchste Arbeitsgeschwindigkeiten und/oder Beschleunigungen bewältigen kann.

Diese wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Behandeln von Behältnissen weist eine Behandlungseinrichtung zum Behandeln der Behältnisse und einen Träger, der bezüglich einer Halterung linear beweglich angeordnet ist auf, wobei zwischen dem Träger und der Halterung eine Vielzahl von Wälzkörpern angeordnet ist, welche die Bewegung der Behandlungseinrichtung und/oder die Bewegung des Trägers gegenüber der Halterung führen, wobei diese Wälzkörper wenigstens zeitweise sowohl eine Lauffläche des Trägers als auch eine Lauffläche der Halterung kontaktieren. Die Halterung dient bevorzugt zum Halten des Trägers.

Erfindungsgemäß sind die Wälzkörper in einem Wälzkörperkäfig angeordnet und bewegen sich in der (linearen und/oder geradlinigen) Bewegungsrichtung, wobei sich dieser Wälzkörperkäfig in der Bewegungsrichtung erstreckt und (in der Bewegungsrichtung) eine größere Länge aufweist als die Halterung (oder als die Laufflächen der Halterung) und/oder dass der Wälzkörperkäfig derart gestaltet ist, dass einige der Wälzkörper auch zeitweilig außerhalb der Halterung liegen bzw. angeordnet sind. Dies bedeutet, dass jeweils einige der Wälzkörper nicht von der Lauffläche der Halterung geführt werden.

Unter einer linearen Bewegung wird verstanden, dass die Relativbewegung zwischen dem Träger und der Halterung bzw. die Bewegung des Trägers gegenüber der Halterung linear und/oder geradlinig ist. Die Gesamtbewegung der Behandlungseinrichtung im Raum muss nicht unbedingt linear sein, da sie sich aus dieser linearen Bewegung und der Bewegung eines Trägers zusammensetzen kann.

Bevorzugt ist der Träger stangenartig ausgeführt und erstreckt sich mit seiner Längsrichtung insbesondere in seiner Bewegungsrichtung.

Bei einer bevorzugten Ausführungsform ist die Behandlungseinrichtung an dem Träger angeordnet (und insbesondere nicht linear beweglich angeordnet). Dabei ist es möglich, dass die Behandlungseinrichtung fest an dem Träger, beispielsweise einem Endabschnitt des Trägers angeordnet ist. Es wäre jedoch auch denkbar, dass die Behandlungseinrichtung schwenkbar an dem Träger angeordnet ist. Bevorzugt handelt es sich bei der Behandlungseinrichtung um eine Greifeinrichtung zum Greifen der Behältnisse.

Bevorzugt ist der Träger (bevorzugt gemeinsam mit der (den Träger haltenden) Halterung) schwenkbar gegenüber einer Schwenkachse angeordnet. Bei einer weiteren bevorzugten Ausführungsform ist die Behandlungseinrichtung in der gleichen Schwenkebene schwenkbar an dem Träger angeordnet, in der auch der Träger selbst schwenkbar angeordnet ist.

Bei einer weiteren bevorzugten Ausführungsform ist eine Führungsrolle vorgesehen, welche die (lineare bzw. geradlinige) Bewegung des Trägers gegenüber der Halterung bewirkt. Bevorzugt ist eine weitere Führungsrolle vorgesehen, welche die Schwenkbewegung des Trägers bezüglich einer vorgegebenen Schwenkachse bewirkt. Bevorzugt erfolgt diese Schwenkbewegung dabei gegenüber einem Hauptträger, an dem die gesamte Einrichtung d. h. wenigstens die Halterung und der Träger angeordnet ist.

Bevorzugt bewegt sich der Träger in der linearen Richtung gegenüber der Halterung und/oder die Halterung ist in dieser linearen Richtung stationär angeordnet (insbesondere stationär in dieser Richtung gegenüber einem Hauptträger angeordnet). Es wäre jedoch auch denkbar, dass der Träger stationär angeordnet ist und sich die Halterung in der linearen Richtung bewegt. In diesem Fall ist bevorzugt die Behandlungseinrichtung an der Halterung angeordnet. Allgemein ist bevorzugt die Behandlungseinrichtung an dem linear beweglichen Element angeordnet.

Bei einer weiteren bevorzugten Ausführungsform sind die Wälzkörper in wenigstens einer und bevorzugt in mehreren Reihen angeordnet. Dabei erstreckt sich bevorzugt jede dieser Reihen ausschließlich geradlinig, es findet also keine Umlenkung der Wälzkörper statt.

Bei einer weiteren bevorzugten Ausführungsform kontaktieren alle Wälzkörper einer Wälzkörperreihe gleichzeitig eine an dem Träger ausgebildete Lauffläche, wobei sich diese Lauffläche ausschließlich geradlinig erstreckt. Bevorzugt ist auch eine Reihe hintereinander angeordneter Wälzkörper länger als die Halterung.

Bevorzugt bewegt sich dabei sowohl der Träger als auch der Wälzkörperkäfig gegenüber der Halterung in der besagten linearen Richtung. Allerdings bewegt sich der Wälzkörperkäfig bevorzugt gegenüber dem Träger (bzw. der Träger gegenüber dem Wälzkörperkäfig) mit einer geringeren Geschwindigkeit als sich der Träger gegenüber der Halterung bewegt und bevorzugt bewegt sich der Träger gegenüber dem Wälzkörperkäfig mit der halben Geschwindigkeit, mit der sich der Träger gegenüber der Halterung bewegt.

Bevorzugt bewegen sich stets alle Wälzkörper stets in der gleichen Bewegungsrichtung gegenüber dem Träger in der sich der Träger gegenüber der Halterung bewegt. Wenn sich beispielsweise der Träger in einer ersten Bewegungsrichtung gegenüber der Halterung bewegt, bewegen sich auch alle Wälzkörper in dieser Bewegungsrichtung.

Bei einer weiteren bevorzugten Ausführungsform ist wenigstens eine der Laufflächen, an denen die Wälzkörper abrollen gehärtet. Bevorzugt sind sowohl die Laufflächen des Trägers als auch die Laufflächen der Halterung gehärtet.

Bei einer weiteren vorteilhaften Ausführungsform ist die Vorrichtung und/oder der Träger und/oder die Halterung und/oder der Wälzkörperkäfig mit einer anhaftenden und/oder korrosionshemmenden Schmierung versehen. So sind sehr reibarme und geräuschlose Linearsysteme realisierbar.

Bei einer weiteren bevorzugten Ausführungsform ist eine Schmiereinrichtung an wenigstens einer Endseite des Trägers und/oder der Halterung vorgesehen.

Diese Schmiereinrichtung gibt bevorzugt bei Bewegung auf die vorbeilaufenden Wälzkörper und insbesondere Kugeln einen Schmierstoff ab. Die Schmiereirichtung hat bevorzugt ein Reservoir das mit Öl, Fett oder anderen gebräuchlichen Schmierstoffen wieder befüllt werden kann. Die Schmiereinrichtung kann besonders bevorzugt fest verschraubt oder auch aufsteckbar sein. Die Schmierung kann auch direkt im Wälzkörperkäfig mit eingelagert sein.

Bevorzugt weist der besagte Träger keine Umlenkungen (für die Wälzkörper) und auch keine Rückführkanäle auf.

Bei einer weiteren bevorzugten Ausführungsform liegen daher wenigstens zeitweise einige Wälzkörper in der Bewegungsrichtung außerhalb der Halterung und/oder außerhalb der Laufflächen der Halterung. Dies kann insbesondere in den Extrempositionen des Trägers gegenüber der Halterung auftreten, in der diejenigen Wälzkörper, die an dem gegenüberliegenden Ende des Wälzkörperkäfigs angeordnet sind, außerhalb der Halterung angeordnet sind. Auch ist es möglich, dass wenigstens zeitweise Wälzkörper in beiden einander entgegengesetzten Bewegungsrichtungen über die Halterung hinausragen.

Es wird darauf hingewiesen, dass auch diese Halterung mehrteilig aufgebaut sein kann. Dabei kann diese Halterung einen Träger aufweisen, der unmittelbar mit dem Wälzkörperkäfig bzw. den Wälzkörpern in Kontakt steht (und der bevorzugt auch die Laufflächen für die Wälzkörper aufweist) und an diesem Träger können wiederum weitere Elemente angebracht sein, welche beispielsweise eine Drehung des Trägers erlauben, wie etwa ein Schwenklager.

Bei einer weiteren bevorzugten Ausführungsform ist die Halterung schwenkbar bezüglich einer Schwenkachse gelagert, welche bevorzugt senkrecht zu der Bewegungsrichtung des Trägers gegenüber der Halterung steht.

Bei einer weiteren Ausführungsform kann beispielsweise der Träger auch als Läufereines Linearmotors ausgebildet sein und die Halterung als Stator dieses Linearmotors.

Besonders bevorzugt sind der Träger und auch die Halterung so modifiziert, dass ein Durchfahren des Wälzkörperkäfigs durch die Halterung ermöglicht ist.

Bei einer weiteren bevorzugten Ausführungsform ist der Wälzkörperkäfig dazu geeignet um bestimmt, die Wälzkörper eigenständig zu halten und insbesondere eigenständig an dem Träger zu halten. Dies bewirkt, dass die Wälzkörper auch in der Position, in der diese nicht in Kontakt mit der Halterung stehen an dem Träger gehalten werden. Beispielsweise kann der Wälzkörperkäfig derart gestaltet sein, dass er selbst, beispielsweise durch eine Spannwirkung, eigenständig an dem Träger hält. Die Wälzkörper können wiederum in Ausnehmungen und/oder Taschen angeordnet sein, die so gestaltet sind, dass die Wälzkörper nicht aus diesen herausfallen können. Diese Ausnehmungen oder Taschen können dabei bevorzugt derart ausgebildet sein, dass die Wälzkörper nicht durch diese nach außen (vom Träger aus betrachtet) treten können.

Bei einer bevorzugten Ausführungsform ist der Wälzkörperkäfig einteilig ausgebildet. Dabei kann dieser Wälzkörperkäfig ein in vorgegebener Weise gefertigtes Element sein, beispielsweise ein gefrästes, ein gebohrtes, eine verstemmtes, oder ein gespritztes Element. Bei einer weiteren bevorzugten Ausführungsform handelt es sich bei dem Wälzkörperkäfig um ein im 3D Druck Verfahren gefertigtes Element.

Bei einer weiteren bevorzugten Ausführungsform sind die Wälzkörper Kugeln. Daneben können jedoch auch Zylinder als Wälzkörper eingesetzt sein, kegelstumpfartige Wälzkörper und dergleichen.

Bei einer weiteren bevorzugten Ausführungsform ist der Träger als Profilschiene mit wenigstens einer und bevorzugt mit wenigstens zwei sich in der Bewegungsrichtung erstreckenden Ausnehmungen ausgebildet. Dabei weisen bevorzugt diese Ausnehmungen in der Bewegungsrichtung einen gleichbleibenden Querschnitt auf.

Bevorzugt ist auch wenigstens eine der Laufflächen für die Wälzkörper in oder teilweise in dieser Ausnehmung ausgebildet. Bei einer weiteren bevorzugten Ausführungsform ist wenigstens eine Lauffläche des Trägers wenigstens teilweise und bevorzugt vollständig außerhalb der Ausnehmung ausgebildet. Bevorzugt sind die Ausnehmungen an gegenüberliegenden Seiten des Trägers ausgebildet. So erstreckt sich bevorzugt der Träger in einer Längsrichtung, die insbesondere auch der Bewegungsrichtung entspricht, und einer hierzu senkrechten Breiten- und/oder einer Dickenrichtung. Bevorzugt sind die Ausnehmungen derart ausgebildet, dass sie sich in der Längsrichtung erstrecken und in der Breiten- und Dickenrichtung ein gleichbleibendes Profil aufweisen.

Bevorzugt verlaufen wenigstens einige der Wälzkörper wenigstens zeitweise innerhalb der Ausnehmungen. Bevorzugt verlaufen einige der Wälzkörper stets außerhalb der Ausnehmungen.

Damit basiert die neuartige hier beschriebene Linearführung auf Profilschienenführungssystemen, die jedoch ohne Umlenkungen und Rückführkanäle auskommen.

Wie oben erwähnt, wird hierzu ein in spezieller Weise ausgelegter Wälzkörperkäfig verwendet, der die Wälzkörper bzw. Kugeln selbst hält und bevorzugt auf dem Träger bzw. der Profilschiene bei der Bewegung mitführt. Dabei werden die Wälzkörper bzw. Kugeln nicht nur umgelenkt, sondern bewegen sich längs zur Bewegungsrichtung und fahren somit an wenigstens einem Ende und bevorzugt an beiden Enden aus der Führung (insbesondere der Führung der Behandlungseinrichtung) heraus.

Bei einer weiteren bevorzugten Ausführungsform weist der Wälzkörperkäfig eine Vielzahl von Taschen auf, in denen die Wälzkörper gehalten werden, um diese beim Ausfahren bzw. Einfahren in die Halterung wieder in die Führungsfläche (der Behandlungseinrichtung) einzuführen. Dabei sind diese Taschen bevorzugt derart gestaltet, dass die Wälzkörper nicht nach außen (ausgehend von dem Träger) aus diesem austreten können. So können die Taschen beispielsweise Öffnungen aufweisen, welche nur den Durchtritt eines Teils der Oberfläche der Kugeln erlauben, nicht aber einen Durchtritt des Querschnitts der Kugeln.

Bevorzugt ist der Wälzkörperkäfig derart gestaltet, dass er eigenständig, d. h. ohne ein Zusammenwirken mit der Halterung sämtliche Wälzkörper an dem Träger halten kann.

Der Wälzkörperkäfig kann dabei aus unterschiedlichen Materialien hergestellt sein, beispielsweise aus Kunststoffen oder auch aus metallischen Werkstoffen. Bei einer weiteren bevorzugten Ausführungsform sind die Wälzkörper zweireihig, vierreihig oder sechsreihig angeordnet. Diese jeweilige Anordnung ist dabei insbesondere an die mechanischen Gegebenheiten und/oder die zu erwartenden Belastungen der Wälzkörper angepasst. So wäre es beispielsweise möglich, dass zwei Reihen von Wälzkörpern an einer Seite des Trägers angeordnet sind und zwei weiteren Reihen an der gegenüberliegenden Seite.

Bei einer weiteren bevorzugten Ausführungsform sind die Wälzkörper in einer X oder einer O Anordnung anordnet. Diese Anordnungen werden ebenfalls entsprechend der mechanischen Belastung gewählt. Ob eine X oder eine O Anordnung vorliegt, ergibt sich aus der Anordnung der jeweiligen Führungsflächen für die Kugeln. Dabei können beispielsweise Drucklinien gezeichnet werden, welche ein X oder ein O andeuten. So wäre es beispielsweise möglich, dass zwei spiegelbildlich angeordnete Schrägkugellager vorgesehen sind. Die Lage der Drucklinien, d. h. der Kraftflusslinien gibt dann an, ob es sich um eine X oder eine O Anordnung handelt.

Die hier beschriebene Anordnung erlaubt sehr hohe Bahngeschwindigkeiten und/oder Bahnbeschleunigungen der Behandlungseinrichtung. So können diese Beschleunigungen beispielsweise größer sein als 50 m/s² bevorzugt größer als 100 m/s² und bevorzugt größer als 150 m/s². Weiterhin sind Beschleunigungen möglich bis hin zu 300 m/s². Denkbar wären aber auch Beschleunigungen die größer als 300 m/s² sind. Auf diese Weise wird eine hohe Leichtgängigkeit der Führung erreicht.

Weiterhin erlaubt die Erfindung eine präzise spielfreie oder auch vorgespannte Führung für extrem hohe Bahnbeschleunigungen mit einer hohen Lastaufnahme, Steifigkeit und auch mit hohen Drehmomenten. Bei einer extremen Richtungswechselgeschwindigkeit stellt auch dies kein Problem dar, da keine Umlenkungen und gegenseitige Kugelreibung vorhanden sind. Weiterhin bieten die hier beschriebenen Führungen den Vorteil, dass kein sogenannter Slipstickeffekt (Haftgleiteffekt) auftritt. Bei einer bevorzugten Ausführungsform ist auch ein Trockenlauf oder lediglich die Verwendung einer Initialschmierung möglich. Daneben sind auch weniger Bauteile mit winkeliger Ausgestaltung vorgesehen.

Bei einer bevorzugten Ausführungsform weist die Führungseinrichtung auch eine Schmiereinrichtung auf, welche dazu geeignet und bestimmt ist, die Lagerführung mit einem Schmierstoff zu schmieren.

Bei einer bevorzugten Ausführungsform ist der Wälzkörperkäfig wenigstens 1,2 mal so lang in der Bewegungsrichtung wie die Halterung, bevorzugt wenigstens 1,4 mal so lang, bevorzugt wenigstens 1,5 mal so lang und bevorzugt wenigstens 1,7 mal so lang. Bei einer weiteren bevorzugten Ausführungsform ist der Wälzkörperkäfig höchstens 2,5 mal so lang in der Bewegungsrichtung wie die Halterung bevorzugt höchstens 2,2 mal so lang, bevorzugt höchstens 2,0 mal so lang und bevorzugt höchstens 1,8 mal so lang.

Bei einer weiteren bevorzugten Ausführungsform umgreift der Wälzkörperkäfig wenigstens abschnittsweise die Profilschiene, bzw. den Träger. Besonders bevorzugt weist der Wälzkörperkäfig eine Seitenfläche auf, die ohne Wälzkörper ausgebildet ist, und die einer entsprechenden Seitenfläche des Trägers gegenüber liegt. Diese Seitenfläche ist dabei bevorzugt eine Verbindungsfläche, welche zwei weitere Seitenflächen, welche wiederum Wälzkörper aufweisen miteinander verbindet. Diese Seitenfläche kann dabei von der entsprechenden Seitenfläche des Trägers beabstandet sein.

Bevorzugt weist der Wälzkörperkäfig ein U-förmiges Profil auf. Es könnten jedoch auch andere Profile wie beispielsweise trapezförmige Profile, dreieckförmige Profile oder mäanderförmige Profile verwendet werden.

Wie oben erwähnt hintergreifen bevorzugt die Wälzkörper bzw. Kugeln die Profilbereiche des Trägers. Bei einer weiteren bevorzugten Ausführungsform ist die hier beschriebene Vorrichtung eine Vorrichtung zum Transportieren von Behältnissen. Besonders bevorzugt weist die Vorrichtung eine Greifeinrichtung zum Greifen der Behältnisse auf, wobei diese Greifeinrichtung bevorzugt ein Bestandteil der Behandlungseinrichtung ist.

Bei einer bevorzugten Ausführungsform handelt es sich bei der Vorrichtung um einen Transportstern zum Transportieren von Behältnissen. Insbesondere handelt es sich bei der Vorrichtung um einen sogenannten Teilungsverzugsstern, der dazu geeignet und bestimmt ist, während eines Transports der Behältnisse auch einen Abstand der Behältnisse zueinander zu verändern. Bevorzugt weist diese Vorrichtung einen drehbaren Träger auf, an dem eine Vielzahl von Behandlungseinrichtungen der oben beschriebenen Art (bevorzugt an einer entsprechenden Vielzahl von Trägern) angeordnet ist. Diese weisen dabei bevorzugt jeweils die oben beschriebenen Linearführungen auf. Dabei ist es möglich, dass diese Behandlungseinrichtungen und/oder die Träger auch schwenkbar an diesem Träger (d. h. dem Hauptträger) angeordnet sind.

Die vorliegende Erfindung ist weiterhin auf Linearführungseinrichtung für eine Vorrichtung zum Behandeln von Behältnissen mit einem Träger, der bezüglich einer Halterung linear beweglich angeordnet ist, gerichtet wobei zwischen dem Träger und der Halterung eine Vielzahl von Wälzkörpern angeordnet ist, welche die Bewegung des Trägers gegenüber der Halterung und/oder die Bewegung einer Behandlungseinrichtung führen, wobei diese Wälzkörper wenigstens zeitweise sowohl eine Lauffläche des Trägers als auch eine Lauffläche der Halterung kontaktieren.

Erfindungsgemäß sind die Wälzkörper in einem Wälzkörperkäfig angeordnet und bewegen sich in der Bewegungsrichtung und insbesondere ausschließlich in dieser Bewegungsrichtung. Dabei erstreckt sich dieser Wälzkörperkäfig in dieser Bewegungsrichtung und weist eine größere Länge auf als die Halterung und/oder als die Laufflächen der Halterung. Es wäre denkbar, dass die Halterung selbst länger ist als dessen Laufflächen.

Bevorzugt dient die Linearführungseinrichtung zum Bewegen einer Behandlungseinrichtung, welche Behältnisse behandelt. Es wird also eine Behandlungseinrichtung vorgeschlagen, die insbesondere zum Behandeln von Behältnissen dient. Dabei kann es sich um eine Behandlungseinrichtung handeln, welche die Behältnisse selbst bewegt. Es könnten jedoch auch weitere Elemente bewegt werden, wie beispielsweise eine Reckstange einer Blasformmaschine, welche in Behältnisse eingeführt wird, eine Blasdüse, welche auf einen Kunststoffvorformling zugestellt wird, Füllköpfe einer Füllmaschine oder dergleichen. Auch können etwa Gebinde von Behältnissen bewegt werden.

Die vorliegende Erfindung ist weiterhin auf einen Wälzkörperkäfig für eine Linearführungseinrichtung einer Vorrichtung zum Behandeln von Behältnissen gerichtet mit einer ersten Seitenwand, welche sich in einer vorgegebenen Längsrichtung erstreckt und welche eine Vielzahl von in dieser Längsrichtung hintereinander angeordneten Ausnehmungen zur Aufnahme von kugelförmigen Wälzkörpern aufweist, mit einer zweiten Seitenwand, welche sich in der vorgegebenen Längsrichtung erstreckt und welche eine Vielzahl von in dieser Längsrichtung hintereinander angeordneten Ausnehmungen zur Aufnahme von kugelförmigen Wälz-körpern aufweist und mit einer (sich bevorzugt ebenfalls in dieser Längsrichtung erstreckenden) Verbindungswand, welche die erste Seitenwand und die zweite Seitenwand miteinander verbindet.

Erfindungsgemäß sind die ersten Ausnehmungen und die zweiten Ausnehmungen derart dimensioniert und/oder gestaltet, dass die Wälzkörper nicht durch die Seitenwand treten können.

Bevorzugt sind die erste Seitenwand und die zweite Seitenwand im Wesentlichen parallel zueinander. Bevorzugt weisen diese Ausnehmungen jeweils eine (Boden-)Öffnung auf, durch welche zwar ein Abschnitt der Oberfläche der Wälzkörper treten kann, nicht jedoch der (größte) Querschnitt der Wälzkörper. Bevorzugt sind die Ausnehmungen zur Aufnahme von kugelförmigen Wälzkörpern geeignet und bestimmt.

Bevorzugt bildet jede Seitenwand wenigstens zwei Reihen an Ausnehmungen für Wälzkörper aus. Bei einer bevorzugten Ausführungsform weist der Wälzkörperkäfig eine Vielzahl von Wälzkörpern und insbesondere von kugelförmigen Wälzkörpern auf. Bevorzugt sind diese Wälzköper entlang der Längsrichtung der Seitenwände angeordnet.

Weitere Vorteile und Ausführungsformen ergeben sich aus den beigefügten Zeichnungen:
- Fig. 1: eine vereinfachte Darstellung einer erfindungsgemäßen Linearführungseinrichtung;
- Fig. 2: eine Schnittansicht der in Figur 1 gezeigten Linearführungseinrichtung; und
- Fig. 3: eine Darstellung einer Transporteinrichtung mit einer Linearführungseinrichtung.

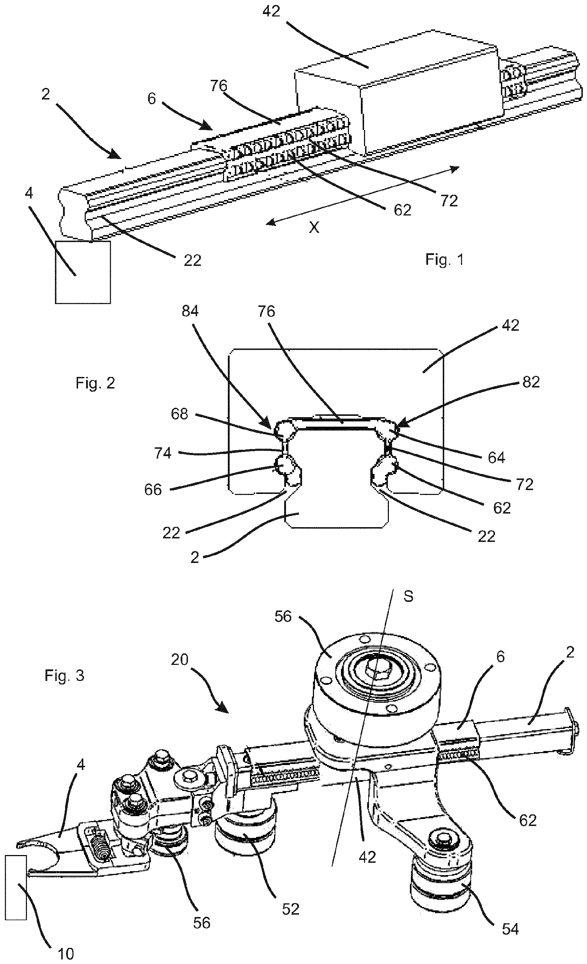

Figur 1 zeigt eine vereinfachte Darstellung einer Linearführungseinrichtung. Dabei ist ein Träger 2 vorgesehen. An diesem Träger ist beweglich, die in ihrer Gesamtheit mit 4 bezeichnete, Behandlungseinrichtung angeordnet. Diese ist dabei lediglich schematisch dargestellt und kann weitere Elemente, wie eine Behältnisgreifeinrichtung aufweisen.

Der Träger 2 ist gegenüber einer Halterung 42 linear beweglich. Die Halterung kann dabei an einem (nicht gezeigten) Hauptträger wie etwa einem Transportrad angeordnet sein.

Auch ist es möglich, dass an dem Träger 2 und/oder der Halterung 42 (nicht gezeigte) Antriebe wie elektromotorische Antriebe angeordnet sind).

Der (insbesondere stangenförmige) Träger 2 bewegt sich gegenüber der Halterung 42 in der Bewegungsrichtung X, die geradlinig verläuft. Der Träger 2 weist hier zwei Ausnehmungen 22 (nur eine sichtbar) auf, die an den Seiten des Trägers 2 angeordnet sind, und die sich ebenfalls in der Bewegungsrichtung X erstrecken.

Das Bezugszeichen 6 kennzeichnet einen Wälzkörperkäfig, der an dem Träger 2 (beweglich in der Richtung X) angeordnet ist. Dieser Wälzkörperkäfig 6 weist dabei eine Verbindungswand 76 auf, sowie zwei Seitenwände 72, 74. In den Seitenwänden 72, 74 sind hier jeweils zwei Reihen von Wälzkörpern bzw. Kugeln 62 angeordnet, welche zur Lagerung dienen. Die Bezugszeichen 82 und 84 beziehen sich auf Ausnehmungen, in denen die einzelnen Wälzkörper bzw. Kugeln jeweils angeordnet sind. Dabei können die Wälzkörper nicht vollständig nach außen aus den Ausnehmungen heraustreten, ragen jedoch, wie in Fig. 2 erkennbar, über diese hinaus, so dass sie in Kontakt mit den Laufflächen der Halterung 42 treten können.

Dabei erkennt man, dass die untere Reihe der Kugeln in der Ausnehmung 22 verläuft, während die obere Reihe der Kugeln oberhalb der Ausnehmung 22 angeordnet ist. Auf diese Weise wird ein Halt des Wälzkörperkäfigs an den Träger 2 gewährleistet. An dem Träger 2 Bereichen sind auch die Laufflächen für die Wälzkörper ausgebildet. Entsprechende Laufflächen befinden sich auch an der Innenseite der Halterung 42.

Figur 2 zeigt eine Schnittdarstellung der in Figur 1 gezeigten Führungseinrichtung. Man erkennt, dass hier die beiden Reihen 62 und 66 der Wälzkörper innerhalb der Ausnehmung 22 verlaufen. Die zwei weiteren Reihen 64 und 68 verlaufen oberhalb der Ausnehmung 22, sodass ein Abschnitt des Profils zwischen den Wälzkörperreihen 66 und 68 bzw. 62 und 64 aufgenommen ist.

Auf diese Weise wird ein sicherer Halt des Trägers an der Halterung 42 ermöglicht.

Figur 3 zeigt eine Veranschaulichung einer Anwendung der vorliegenden Erfindung, d. h. eine Vorrichtung 1 zum Behandeln von Behältnissen in Form eines Teilungsverzugssterns 1. Dieser weist einen um eine Drehachse drehbaren Träger auf (nicht gezeigt) an dem die in Fig. 3 gezeigte Behandlungseinheit 20 angeordnet ist, sowie auch weitere gleichartige Behandlungseinheiten.

Das Bezugszeichen 4 kennzeichnet eine Behandlungseinrichtung in Form einer Greifklammer, welche zum Greifen eines (nur schematisch dargestellten) Behältnisses 10 dient. Dabei ist diese Behandlungseinrichtung 4 schwenkbar an dem Träger 2 angeordnet. Zum Bewirken dieser Schwenkbewegung ist eine Führungsrolle 56 vorgesehen.

Der Träger ist gegenüber der Halterung 42 linear beweglich, wobei zum Durchführen dieser Bewegung bevorzugt eine weitere Führungsrolle 52 vorgesehen ist, die an dem Träger 2 angeordnet ist.

Die Halterung 42 ist bevorzugt gemeinsam mit dem Träger 2 bezüglich einer Schwenkachse S schwenkbar, wobei diese Schwenkachse besonders bevorzugt senkrecht zu der Bewegungsrichtung X (vgl. Fig. 1) steht. Diese Schwenkbewegung wird bevorzugt mittels eines Schwenklagers 56 und einer weiteren Führungsrolle bewirkt. Die oben genannten Führungsrollen laufen bevorzugt gegenüber (nicht gezeigten) Führungsschienen ab.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Behandeln von Behältnissen (10) mit einer Behandlungseinrichtung (4) zum Behandeln der Behältnisse (10), und einem Träger (2), der bezüglich einer Halterung (42) linear beweglich angeordnet ist wobei zwischen dem Träger (2) und der Halterung (42) eine Vielzahl von Wälzkörpern (62) angeordnet ist, welche die Bewegung der Behandlungseinrichtung (4) führen, wobei diese Wälzkörper (62) wenigstens zeitweise sowohl eine Lauffläche des Trägers (2) als auch eine Lauffläche der Halterung (42) kontaktieren,
**dadurch gekennzeichnet, dass**
die Wälzkörper (62) in einem Wälzkörperkäfig (6) angeordnet sind und sich in der Bewegungsrichtung (X) bewegen, wobei sich dieser Wälzkörperkäfig (6) in der Bewegungsrichtung (X) erstreckt und eine größere Länge aufweist als die Halterung (42).

2. Vorrichtung (1) nach Anspruch 1,
**dadurch gekennzeichnet, dass**
wenigstens zeitweise Wälzkörper (62) in der Bewegungsrichtung (X) außerhalb der Halterung (42) angeordnet sind.

3. Vorrichtung (1) nach wenigstens einem der vorangegangenen Ansprüche,
**dadurch gekennzeichnet, dass**
der Wälzkörperkäfig (6) dazu geeignet und bestimmt ist, die Wälzkörper (62) eigenständig an dem Träger (2) zu halten.

4. Vorrichtung (1) nach wenigstens einem der vorangegangenen Ansprüche,
**dadurch gekennzeichnet, dass**
die Wälzkörper (62) Kugeln und insbesondere Stahlkugeln oder Keramikkugeln sind.

5. Vorrichtung (1) nach wenigstens einem der vorangegangenen Ansprüche,
**dadurch gekennzeichnet, dass**
der Träger als Profilschiene mit wenigstens einer und bevorzugt mit wenigstens zwei sich in der Bewegungsrichtung erstreckenden Ausnehmungen (22) ausgebildet ist.

6. Vorrichtung (1) nach dem vorangegangenen Anspruch,
**dadurch gekennzeichnet, dass**
wenigstens einige Wälzkörper (62) wenigstens zeitweise innerhalb der Ausnehmungen verlaufen.

7. Vorrichtung (1) nach wenigstens einem der vorangegangenen Ansprüche,
**dadurch gekennzeichnet, dass**
die Wälzkörper zweireihig, vierreihig oder sechsreihig angeordnet sind und/oder dass die Wälzkörper in X- oder in O-Anordnung angeordnet sind.

8. Vorrichtung (1) nach wenigstens einem der vorangegangenen Ansprüche,
**dadurch gekennzeichnet, dass**
die Vorrichtung (1) eine Transportvorrichtung (1) zum Transportieren von Behältnissen ist.

9. Linearführungseinrichtung für eine Vorrichtung zum Behandeln von Behältnissen mit einer Behandlungseinrichtung (4) zum Behandeln der Behältnisse (10), und einem Träger (2), der bezüglich einer Halterung (42) linear beweglich angeordnet ist wobei zwischen dem Träger (2) und der Halterung (42) eine Vielzahl von Wälzkörpern (62) angeordnet ist, welche die Bewegung des Trägers gegenüber der Halterung (42) führen, wobei diese Wälzkörper (62) wenigstens zeitweise sowohl eine Lauffläche des Trägers (2) als auch eine Lauffläche der Halterung (42) kontaktieren,
**dadurch gekennzeichnet, dass**
sich die Wälzkörper in einem Wälzkörperkäfig (6) angeordnet sind und sich in der Bewegungsrichtung (X) bewegen, wobei sich dieser Wälzkörperkäfig in der Bewegungsrichtung (X) erstreckt und eine größere Länge aufweist als die Halterung (42).

10. Wälzkörperkäfig (6) für eine Linearführungseinrichtung einer Vorrichtung zum Behandeln von Behältnissen (10) mit
einer ersten Seitenwand (72), welche sich in einer vorgegebenen Längsrichtung (X) erstreckt und welche eine Vielzahl von in dieser Längsrichtung (X) hintereinander angeordneten Ausnehmungen (82) zur Aufnahme von kugelförmigen Wälzkörpern aufweist, mit einer zweiten Seitenwand (74), welche sich in der vorgegebenen Längsrichtung (X) erstreckt und welche eine Vielzahl von in dieser Längsrichtung (X) hintereinander angeordneten Ausnehmungen (84) zur Aufnahme von kugelförmigen Wälzkörpern aufweist und mit einer Verbindungswand (76), welche die erste Seitenwand (72) und die zweite Seitenwand (74) miteinander verbindet,
**dadurch gekennzeichnet, dass**
ersten Ausnehmungen (82) und die zweiten Ausnehmungen (84) derart dimensioniert sind, dass die Wälzkörper (62) nicht durch die Seitenwand (72, 74) treten können.
